# EUROPEAN PATENT APPLICATION

(11) **EP 2 371 922 A1**
(43) Date of publication of application: **05.10.2011**
(21) Application number: 10158493.6
(22) Date of filing: 30.03.2010
(51) Int. Cl.: C09J 153/02

(54) **Hot melt adhesive**

(71) Applicant: The Procter & Gamble Company, Cincinnati, OH 45202 (US)
(72) Inventor: Corzani, Italo, 66100 CHIETI (IT); Lunetto, Pietro, 65024 MANOPPELLO SCALO (PESCARA) (IT)
(74) Representative: Briatore, Andrea

(57) **Abstract**

The present invention relates to an hot melt adhesive comprising 3-35 % by weight of one or more styrene block copolymers, more than 25% and less than 60%, by weight, of triglycerides of fatty acids with an average carbon chain length distribution from C14 to C20 and a iodine value lower than 50; and 5-70% by weight of a tackifier or blend of tackifiers selected from terpenic tackifiers, rosin tackifiers and rosin ester tackifiers. This hot melt adhesive can be applied at low temperature and has very low tack when cold.

## Description

### FIELD OF THE INVENTION

The present invention relates to new adhesives which can be applied as hot melts. These novel adhesives can be applied at relatively low temperatures, have a very good adhesion performance, low tack when cooled at room temperature, and can be produced using a majority of raw materials obtained from renewable feedstocks.

### BACKGROUND OF THE INVENTION

Hot melt adhesives are used in a wide variety of applications. In the industry they are used e.g. in bonding cardboard boxes, assembling plastic parts, binding books, in manufacturing furniture e1tc. They are also used as construction glue in bonding fibrous layers, such as woven or non woven layers e.g. in the making of absorbent towels, or absorbent articles such as diapers or sanitary napkins.

Hot melt adhesives are applied in their molten state and return in solid state after cooling to room temperature. Some adhesives are still tacky even when cold, other are are not tacky at room temperature. Those which are still tacky at room temperature are called pressure sensitive hot melt adhesives.

The application temperature of hot melt adhesives is general between 100 and 200 °C. Most of the commercially available adhesives have melting points between 150° and 180°, however in some cases it is desirable to use hot-melt adhesives which can be applied at a lower temperature because higher temperatures may damage the substrate on which the hot melt is applied. For example in the case of hygienic absorbent articles such as diapers or sanitary napkins, the adhesive is often coated onto thin substrates such as the very thin plastic (typically PE 20-40 microns thick) films used as backsheets, or thin nonwoven layers used as construction layers (topsheet, secondary topsheet, absorbent cores etc).

Hot melt adhesives typically comprise three classes of ingredients: polymers, plasticizers and tackifiers.

The polymers have the function of providing mechanical strength and typically comprise petroleum derived polymers such as ethylene vinyl acetate polymers or styrene block copolymers. But also other polymers can be used as known in the art. The tackifiers are typically low molecular weight resins which impart tackiness to the material. The plasticizers are material which reduce the viscosity of the hot melt in its melted state. Normally oils and waxes are used as plasticizers. The most common material used as plasticizer is mineral oil. Natural oil and waxes such as triglycerides derived from vegetables have been used in the past, however it is known that the direct substitution of today's synthetic waxes from petroleum with vegetable waxes worsen in general the performance of the adhesives, especially on polyolefinic films and fibers which are major components of hygienic absorbent articles. Another drawback of the use of vegetable derived plasticizers is a poor thermal stability at the temperature of application of the molten adhesive.

There is therefore a need for novel hot melt adhesives which may be formulated using plasticizers from renewable sources while maintaining optimal adhesion on all types of substrates and in particular on polyolefinic films and nonwovens as well as thermal stability and low tack at room temperature.

It is therefore an object of the present invention to provide hot melt adhesives comprising a plasticizer which can be sourced from renewable sources (e.g. vegetable derivatives) without impacting the adhesion performance especially on polyolefin substrates and being thermally stable at their application temperature and having low or zero tack at room temperature.

### SUMMARY OF THE INVENTION

The present invention relates to hot melt adhesives comprising 3-25 % by weight of one or more styrene block copolymers, more than 25% and less than 60% by weight of triglycerides of fatty acids with an average carbon chain length distribution from C14 to C20 and a iodine value lower than 50, and 5-70% by weight of a tackifier or blend of tackifiers selected from terpenic tackifiers, rosin tackifiers and rosin ester tackifiers.

### DETAILED DESCRIPTION OF THE INVENTION

All percentages in the present application should be intended as weight percentages unless otherwise specifically indicated.

### Styrene Block Copolymers

The present invention relates to hot melt adhesives comprising one or more styrene block copolymers.

Styrene block copolymers as a class are described for example in "Thermoplastic Elastomers: A Comprehensive Review", Legge, Holder & Schroeder (Eds), Hauser Publishers (1987), Chapters 3, 4 and 12(1).

Styrene block copolymers are thermoplastic elastomers having at least one A block that includes vinyl aromatic monomers , for example styrene or alpha-methyl styrene, and at least one B block that includes as monomers elastomeric conjugated dienes, for example butadiene or isoprene.

Once polymerized each diene monomer still has a residual insaturation. In some cases these insaturations can be partially or fully hydrogenated. In the present invention in some embodiments the double bonds are not hydrogenated, in other embodiments are partially hydrogenated, in other embodiments are fully hydrogenated. The presence of non hydrogenated residual insaturations on the diene monomers renders the styrene bloc copolymers more polar and allows a greater compatibility with the triglyceride component of the hot-melt of the invention.

Different A and B blocks can alternate along the polymer chain as relatively short blocks (multiblock structure of the form A-B-A-B-A etc); or the molecules can have a three block structure of the form A-B-A where A are terminal blocks and B is a central block of a different nature (linear three block copolymers); or the molecules can have a "radial" or "star" structure represented as (AB)x where all midblocks B are chemically linked together at a central point and terminal blocks A are radially disposed each at the end of block B. Other possible forms are tetrablock copolymer, e.g., A-B-A-B, and pentablock copolymers having a structure of A-B-A-B-A. The styrene block copolymer component of the invention may include blends of one or more different block copolymers.

Styrene monomers which can be used in the styrene block copolymers of the present invention include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, diphenylethylenes including stilbene, vinyl naphthalene, vinylanthracene, vinyltoluene (a mixture of meta- and para-isomers of methylstyrene), vinylxylene, and combinations thereof.

Conjugated dienes which can be used in the styrene bloc copolymers of the present invention include, e.g., butadiene, isoprene , 2,3-dimethyl-1,3-butadiene, 1,3-pentadiene, 1,3-hexadiene, and combinations thereof.

The most commonly used monomers for the A blocks are styrene and alpha-methylstyrene. The most commonly used monomers for the B blocks are butadiene, isoprene and mixtures thereof.

Styrene block coplymers for use in the present invention include, styrene-butadiene block copolymers, multiarmed and repeating styrene-butadiene copolymers, styrene-butadiene-styrene block copolymers, styrene-isoprene block copolymers, styrene-isoprene-styrene block copolymers, styrene, isoprene, butadiene, styrene block coplymers, styrene-multiarmed styrene-isoprene (SI)x block copolymers, styrene-ethylene-butylene-styrene block copolymers, styrene-ethylene-propylene-styrene block copolymers and combinations thereof.

The most common materials used as styrene block copolymers are the so called SIS (styrene, isoprene, styrene), SBS (styrene, butadiene, styrene) and SIBS (styrene, isoprene, butadiene, styrene).

Styrene block copolymers suitable for the present invention usually contain at least two hard blocks "A" per molecule and at least one soft block "B". In some embodiments, molecules formed by one block of A and one block of B (the so called diblocks) are kept lower than 40% by weight in the base polymer.

Styrene block copolymers for use in the present invention include A block monomers in an amount from about 10% by weight to about 60% by weight, from about 20% by weight to about 55% by weight, or from about 25% by weight to 50% by weight. Compositions with a percentage of A block monomers higher than 60% have a high mechanical resistance, but their application temperature is too high, while compositions with a percentage of A block monomers lower than 10% have poor adhesive properties.

Stryrene block copolymers are commercially available under the KRATON trade name from KRATON company, EUROPRENE from Polimeri Europa, Kuraray from Kuraray, and VECTOR from Dexco.

The Styrene block coplymer is present in the adhesive composition in an amount from 3% by weight to about 35% by weight, from about 5% by weight to about 25% by weight, or from about 10% by weight to about 22% by weight.

Compositions with amounts of styrene block copolymers lower than 3% by weight have very low mechanical resistance, while compositions with more than 35% by weight of styrene block copolymers have, in general, lower adhesive properties.

### Tackifiers

The hot melt adhesives of the present invention comprise a tackifier or blend of tackifiers. Tackifiers, also called "tackifying resins" are commonly used in hot melt adhesives and have the function of increasing tackiness of the adhesive, especially in its molten state. Tackifiers as a class are well known to the skilled person.

The tackifiers which are suitable for the present invention are those which can be originated from vegetable sources, specifically those selected from from terpenic tackifiers, rosin tackifiers and rosin ester tackifiers.

The compositions of the present invention comprise 5 to 70% by weight of a tackifier or blend of selected tackifiers. Alternative embodiments comprise from 20 to 60% by weight or from 25 to 50% by weight of selected tackifiers. Adhesive compositions with excess tackifiers tend to be more fragile, while those with scarce tackifier tend to have lower adhesive properties.

### Triglycerides

The adhesives of the present invention comprise triglycerides of fatty acids with an average carbon chain length distribution from C14 to C20 and a iodine value lower than 50. Shorter carbon chain lengths (less than C14) can generate bad odours. Longer carbon chains may generate adhesives which are too viscous for easy application. In some embodiments the average carbon chain length distribution can be from C16 to C 18. In certain embodiments shorter carbon chain lengths (less than C14) are present in an amount lower than 5%.

Vegetable oils can be a source of triglycerides for use in the present invention. To note, most vegetable oils comprise triglycerides with a significant level of insaturations. The level of insaturations in oils is routinely measured in the vegetable oil industry by the Iodine value (or "iodine value") measured according to the AOCS Recommended Practice Cd 1b-87 "Iodine Value of Fats and Oils-Cyclohexane Method", published by the AOCS- American Oil Chemists' Society.

Triglicerydes having a iodine value higher than 50 are not suitable for the present invention because they have poor thermal stability (the higher the iodine value the poorer the stability) and also have other characteristics which are often undesirable such as having a yellowish color and/or a unpleasant odor. Triglycerides from vegetable sources will in general need to be hydrogenated before use in order to bring their iodine value below 50.

Hydrogenation can be performed with known techniques in order to obtain the desired iodine value. In some embodiments the iodine value can be lower than 30. In other embodiments lower than 10.

Suitable sources for triglycerides which can be used in the present invention are all vegetable and animal oils and fats. For example soybean oil, having an average carbon chain length of C18, palm oil, castor oil, peanuts oil, olive oil, sunflower oil, rapeseed oil, jatropha oil, coconut oil, pork fat, chicken fat.

During extraction and processing of the natural oils, some of the triglycerides may hydrolyze generating free fatty acids which can be naturally present in the source material. In some embodiments hot melt adhesives according to the present invention may contain from 0.1 % up to 10% by weight of free fatty acids with an average carbon chain length distribution between C14 and C20.

In some embodiments, the triglycerides have a low interaction with the polystyrene domains of the styrene block copolymer. This provides improved cohesion to the final formulation. This parameter is measured according to the "Polystyrene Solubility Index (PSI)" method according to the standard method ASTM D471-06.

In the present invention, the standard method ASTM D471-06 is applied with the following three modifications or definitions:
1) the standard Poly-Styrene material used as the reference for measuring the absorption of the various tested waxes, is Poly-Styrene -Code 182427 (Catalogue 2009), average Mw = 280,000, available from Sigma-Aldrich Company (USA)
2) the Poly-Styrene material is formed by melting into disks having a diameter of 50 mm and a thickness of 1.5 mm.
3) the absorption test is performed for 22 hours at 90°C, so that all the tested waxes are in liquid state

In these embodiments the triglycerides component must have a PSI of less than 10 %. In other embodiments the triglycerides component must have a PSI of less than 5 %.

The adhesive compositions of the present invention comprise more than 25% and less than 60% by weight, or more than 30% and less than 55% by weight, or from 35 to 50% by weight of triglycerides as described above.

### Optional Components

In addition to the essential ingredients mentioned above, namely styrene block copolymers, tackifiers, triglycerides of fatty acids and, optionally, free fatty acids, the adhesives of the present invention may comprise additional optional components to further improve the processability of the compositions and also the mechanical characteristics as well as other characteristics as tackiness, resistance to ageing by light, oxygen and heat, visual appearance etc. Example of optional additives are organic additives like anti-oxidants, organic pigments, odour neutralizers and perfumes.

In some embodiments these optional components are be present in a low amount so that the styrene copolymers, the tackifiers, the triglycerides of fatty acids and, the free fatty acids, if present, constitute in total more than 90% by weight of the total weight of the adhesive, or more than 95% by weight, or more than 98% by weight.

For particular applications the Hot Melt adhesives of the present invention, they can be applied after mixing them with inorganic fillers like Silica, Calcium Carbonate, Talc, Titanium Dioxide, Inorganic Pigments and other similar mineral fillers well known in the art of adhesives. The amount of inorganic filler which can be added to the adhesive is normally up to 10% by weight of the adhesive.

Hot melt adhesives according to the present invention, compounded, by carefully choosing the chemical characteristics of some mixtures of triglycerides, derivable from renewable sources, and by combining such triglycerides with selected Styrene Block Copolymers, are fully suitable for the construction of hygienic absorbent articles and fully comparable, both for performances and for thermal stability in the molten state, to hot melt adhesives currently used for the same purposes and fully derived from synthetic raw materials.

The hot melt adhesives of the present invention not only show excellent adhesion on polyolefinic films and fibers and very good stability to high temperatures even in the molten state, but they possess also other very useful and desirable characteristics for adhesives intended for the construction of hygienic absorbent articles.

In particular they show very good cohesion and unexpectedly low viscosity in the melt that allows their processing at temperatures that are well below the typical temperatures around 150-180°C at which current hot melt adhesives for hygienic absorbent articles, are generally processed and applied.

The hot melt adhesives of the present invention can be processed and applied at temperatures that are below 135°C and that typically are around 120°C. This property gives to these formulations an additional advantage in terms of saving of energy and of benefits for the environment.

Moreover hot melt adhesives according to the invention have a zero or very low tack, once they are cold and set. This property is very desirable in adhesives used inside hygienic absorbent articles. In fact a possible contact between a highly tacky hot melt adhesive and the skin of the user of the hygienic absorbent article, can cause various problems, like skin irritation, interaction with pubic hair, sticking on the skin of some parts of the hygienic articles and other similar problems. With the adhesives of the present invention, that have very low tack at room temperature, possible contacts with the skin of the user do not cause any problem.

The tack of the formulations according to the present invention are measured by the ASTM Method D2979-01 "Standard Test Method for Pressure-Sensitive Tack of Adhesives Using an Inverted Probe Machine" using a steel rod probe of 5 mm diameter at 23°C (herein "room temperature").

In such conditions the formulations according to the present invention must show a tack not higher than 1 N and preferably not higher than 0.8 N and most preferably not higher than 0.5 N.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

When a technical feature is disclosed in relation to one embodiment, this feature can be combined with any other feature(s) disclosed in other embodiment(s) or claim(s), unless stated otherwise.

### EXAMPLES

All percentages are by weight except if otherwise specified.

### EXAMPLE 1

The following ingredients are blended in the molten state at 150°C in a heated mixer for Hot Melts, until a perfectly homogeneous blend is obtained.

| | |
|---|---|
| - Vector 4411 A | 14.0 % |
| - Komotack KS 2100 | 32.6 % |
| - RBD Palm Stearine | 27,5% |
| - LP 400S | 25.5 % |
| - Irganox B225 | 0.4% |

Vector 4411 A is a Styrene- Isoprene-Styrene block copolymer containing about 44 % styrene, available from Dexco Company (USA); Komotack KS 2100 is a Rosin Ester tackifier available from Guangdong Komo Company (China); RBD Palm Stearine is a fully hardened Palm wax obtained from the complete hydrogenation of Palm Oil, available from Mewah Oils Sdn.Bhd Company (Indonesia), having a fatty acid carbon chain length distribution from C14 to C18, a Iodine number of 28 and a PSI of 2%; LP 400S is a fully hardened Soy Wax, obtained from the complete hydrogenation of Soy Bean Oil available from Golden Brands Company (USA), having a fatty acids carbon chain length distribution from C16 to C18, a Iodine number of 0.3 and a PSI of 1%; Irganox B225 is an antioxidant available from Ciba Specialty Company (Switzerland).

The obtained Hot Melt adhesive has a viscosity of 290 mPa.s at 120°C and a Probe Tack value of zero Newton at 23°C.

### EXAMPLE 2

Manufactured in the same way as Example 1, includes a Styrene-Butadiene-Styrene block copolymer instead of SIS.

| | |
|---|---|
| - Vector 4461 | 17.0 % |
| - Komotack KS 2100 | 32.6 % |
| - RBD Palm Stearine | 26,0% |
| - LP 400S | 24.0 % |
| - Irganox B225 | 0.4% |

Vector 4461 A is a Styrene- Butadiene-Styrene block copolymer containing about 43 % styrene, available from Dexco Company (USA).

The obtained Hot Melt adhesive has a viscosity of 700 mPa.s at 120°C and a Probe Tack value of zero Newton at 23°C.

### EXAMPLE 3

A similar formulation containing a blend of SBS and SIS is prepared in the same way as previous examples:

| | |
|---|---|
| - Vector 4461 | 8.5 % |
| - Vector 4411 A | 8.5 % |
| - Komotack KS 2100 | 32.6 % |
| - RBD Palm Stearine | 26,0% |
| - LP 400S | 24.0 % |
| - Irganox B225 | 0.4% |

The obtained Hot Melt adhesive has a viscosity of 560 mPa.s at 120°C and a Probe Tack value of zero Newton at 23°C.

### COMPARATIVE EXAMPLE 1

The following ingredients are blended in the molten state at 177°C, in a heated mixer for Hot Melts, until a perfectly homogeneous blend is obtained.

| | |
|---|---|
| - Vector 4114 | 15.0 % |
| - Escorez 5400 | 45.0 % |
| - Nyflex 222B | 20,0% |
| - 866970 Wax | 20.0 % |
| - Irganox 1010 | 0.3 % |

Vector 4114 A is a Styrene- Isoprene-Styrene block copolymer containing about 15 % styrene, available from Dexco Company (USA); Escorez 5400 is a hydrogenated hydrocarbon tackifier available from Exxon Mobil (USA); Nyflex 222b is a naphtenic mineral oil available Nynas Naphtenics AB (The Netherlands); 866970 Wax is a fully hardened Soy Wax, obtained from the complete hydrogenation of Soy Bean Oil available from ADM Company (USA), having a fatty acids carbon chain length distribution from C16 to C18, a Iodine number of 1.0 and a PSI of 1.1 %; Irganox 1010 is an antioxidant available from Ciba Specialty Company (Switzerland).

The obtained Hot Melt adhesive has a viscosity of 430 mPa.s at 150°C and a Probe Tack value of 3.7 Newton at 23°C.

## Claims

1. An hot melt adhesive comprising.
a) 3-35 % by weight of one or more styrene block copolymers,
b) more than 25% and less than 60%, preferably more than 30% and less than 55% by weight, of triglycerides of fatty acids with an average carbon chain length distribution from C14 to C20.
c) 5-70% by weight of a tackifier or blend of tackifiers selected from terpenic tackifiers, rosin tackifiers and rosin ester tackifiers,
said hot melt adhesive being **characterized in that** said triglycerides of fatty acid have a iodine value lower than 50, preferably lower than 30, even more preferably lower than 10.

2. An hot melt adhesive according to claim 1 also comprising:
d) from 0.1 % to 10% by weight of free fatty acids with an average carbon chain length distribution from C 14 to C20.

3. An hot melt adhesive according to claims 1 or 2 wherein the components a), b), c) and, if present, d) in total constitute more than 90% by weight of the total weight of the adhesive, preferably more than 95%, even more preferably more than 98%.

4. An hot melt adhesive according to any preceding claims wherein the styrene block copolymer is selected from SIS and SBS.

5. An hot melt adhesive according to any preceding claims wherein the triglycerides have a Polystyrene Solubility Index measured according method ASTM D471-06 modified as described herein, of less than 10% and preferably less than 5%.

6. An hot melt adhesive according to any preceding claims wherein the block copolymers are not hydrogenated.

7. An hot melt adhesive according claims 1-5 wherein the block copolymers are partially hydrogenated.

8. An hot melt adhesive according to any preceding claims wherein the block copolymers comprise "A" block monomers in an amount from about 10% by weight to about 60% by weight, preferably from about 20% by weight to about 55% by weight, more preferably from about 25% by weight to 50% by weight.

9. An hot melt adhesive according to any preceding claims wherein the triglycerides of fatty acids have an average carbon chain length distribution between C 16 and C 18.

10. An hot melt adhesive according to any preceding claims which application temperature is below 135°C.
